# EUROPEAN PATENT APPLICATION

(11) **EP 3 388 201 A1**
(43) Date of publication of application: **17.10.2018**
(21) Application number: 16870354.4
(22) Date of filing: 28.10.2016
(51) Int. Cl.: B25F 5/00

(54) **ELECTRICALLY POWERED TOOL**

(30) Priority: 30.11.2015 JP 2015233962
(71) Applicant: Koki Holdings Kabushiki Kaisha, Tokyo (JP)
(72) Inventor: SUDO, Tomoaki, Hitachinaka-City Ibaraki 312-8502 (JP); KAWANO, Yoshikazu, Hitachinaka-City Ibaraki 312-8502 (JP)
(74) Representative: Parker, Andrew James
(86) International application number: PCT/JP2016/082063
(87) International publication number: WO 2017/094414

(57) **Abstract**

Provided is an electrically powered tool with which it is possible to suppress the effect of a fluctuation in power supply voltage on load discrimination accuracy. An electrically powered tool (1) includes a motor (10), a battery pack (5) supplying electric power to the motor (10), a battery voltage detection circuit (17) detecting battery voltage, a current detection circuit (15) detecting current flowing through the motor (10), and a microcomputer (20) controlling driving of the motor (10). The microcomputer (20) discriminates a load state of the motor (10) according to whether or not the current flowing through the motor (10) is equal to or greater than a threshold value, and the microcomputer (20) can change the threshold value in accordance with the battery voltage. When the current flowing through the motor (10) remains below the threshold value for a predetermined period of time, the microcomputer (20) stops the supply of electric power to the motor (10).

## Description

### BACKGROUND

### Technical Field

The present invention relates to an electrically powered tool such as a nibbler or a shear, a grinder or the like.

### Related Art

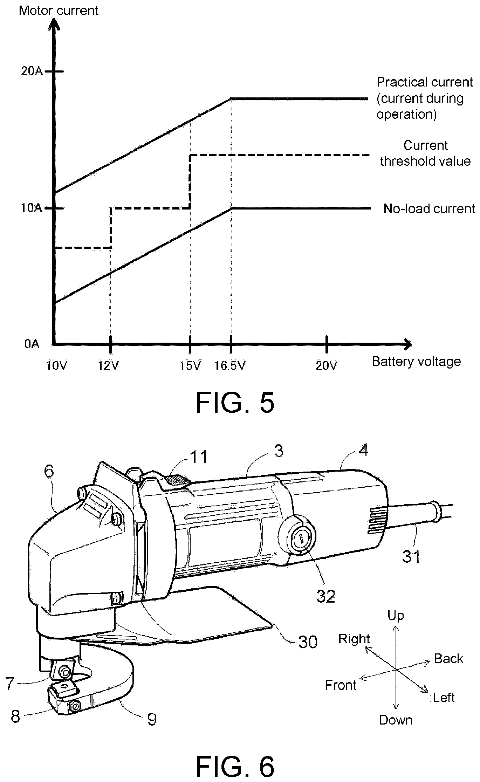

FIG. 6 is a perspective view of a shear as an example of a conventional electrically powered tool. The shear is used for cutting (shearing) a metal plate or the like. In FIG. 6, a housing 3 has built therein a (commutator) motor with brushes as a driving source. A tail cover 4 is provided (fixed) on the rear of the housing 3. The tail cover 4 accommodates therein an electronic member of a control system. A power cable 31 for connecting to an AC power supply such as a commercial power supply is drawn out from a rear end of the tail cover 4. An external-mounting type brush holder 32 is held between the housing 3 and the tail cover 4. The brush holder 32 accommodates therein a carbon brush for motor commutation.

An operation switch 11 switching driving and stopping of the motor is provided on the housing 3. The operation switch 11 is a slide switch in the example of FIG. 6, wherein, by being hooked onto a convex portion (not illustrated) of the housing 3 in a state (ON state) of being pushed out forward, the operation switch 11 can be maintained in the ON state. A gear case 6 is provided (fixed) on the front of the housing 3. The gear case 6 accommodates therein a reciprocating motion conversion mechanism converting a rotation of the motor into a reciprocating motion. The reciprocating motion conversion mechanism holds a movable cutter 7 on a lower end of an output shaft of the reciprocating motion conversion mechanism itself, and drives the movable cutter 7 to reciprocate up and down. The movable cutter 7 is a plate-like cutter member extending in the up-down and front-back directions. A blade holder 9 is provided on a lower portion of the gear case 6. The blade holder 9 holds a fixed cutter 8. The fixed cutter 8 is a plate-like cutter member extending in the front-back and left-right directions. A hand guard 30 is fixed to the gear case 6, preventing the cut-off metal plate or the like from flying toward an operator.

The following Patent Document 1 discloses a configuration of an electrically powered tool performing slow idling to drive a motor at low speed at the beginning of an operation, in which it is possible to detect an operation state regardless of variation in a rotation state of the motor.

### Prior-Art Documents

### Patent Documents

Patent Document 1: Japanese Laid-open No. 2012-139752

### SUMMARY OF THE INVENTION

### Problems to Be Solved by the Invention

In the case where an effective value of a power supply voltage is fixed, a load applied to a motor is specified by current flowing through the motor. Hence, in the case where different controls are performed between when no load is applied and when a load is applied, for example, whether no load is applied or a load is applied can be determined by the current flowing through the motor. Meanwhile, in recent years, electrically powered tools are becoming cordless, and the electrically powered tools using a battery pack as a power supply are increasing. An output voltage of a battery pack fluctuates greatly depending on remaining capacity in such a way that, for example, in the case where a rated voltage is 18 V, the output voltage ranges from 20 V (when fully charged) to 10 V (when the remaining capacity is reduced). Accordingly, on the assumption that the effective value of the power supply voltage is fixed, the load cannot be properly discriminated (detected). In electrically powered tools with cord that are operated by an external power supply, the power supply voltage fluctuates due to a difference in voltage drop based on the length of a power cable, and the same problem still occurs.

The present invention has been made in recognition of such situation, and an object thereof is to provide an electrically powered tool with which it is possible to suppress the effect of a fluctuation in the power supply voltage on load discrimination accuracy.

### Means for Solving the Problems

An aspect of the present invention is an electrically powered tool. The electrically powered tool includes a motor, a power supply voltage detection circuit detecting a voltage of a power supply for driving the motor, a current detection circuit detecting a current flowing through the motor, and a controller controlling a driving of the motor, wherein the controller has a memory element in which a threshold value for a no-load state detection is stored, the controller discriminates a load state of the motor according to whether or not the current flowing through the motor is equal to or greater than the threshold value, and the controller is capable of changing the threshold value in accordance with the voltage of the power supply.

When the current flowing through the motor remains below the threshold value for a predetermined period of time, the controller may stop a supply of electric power to the motor.

Another aspect of the present invention is an electrically powered tool. The electrically powered tool includes a motor, a power supply voltage detection circuit detecting a voltage of a power supply for driving the motor, a current detection circuit detecting a current flowing through the motor, and a controller controlling a driving of the motor, wherein when the current flowing through the motor remains below a threshold value for a no-load state detection for a predetermined period of time, the controller stops a supply of electric power to the motor, and the controller is capable of changing the threshold value in accordance with the voltage of the power supply.

The controller may have a table in which the voltage of the power supply and the threshold value are associated with each other and stored.

The controller may change the threshold value in accordance with the voltage in at least one portion of a voltage range so that the voltage of the power supply is positively correlated with the threshold value.

An operation switch may be included which is adapted to be operated by an operator and which switches the driving and stopping of the motor, wherein the operation switch is adapted to be maintained in an ON state.

The power supply may be a battery.

Two or more kinds of batteries with different rated voltages from each other are adapted to be alternatively installed as the power supply.

The power supply may be an AC power supply.

The motor may be a commutator motor including a stator and a rotor, in which a commutator is provided on the rotor.

A switching element controlling the current flowing through the motor is further included, wherein the controller may stop the supply of electric power to the motor by switching off the switching element.

An anomaly detection component detecting an anomalous state of at least one of the motor or the switching element is included, wherein when the anomaly detection component detects an anomaly, the controller may switch off the switching element to stop the supply of electric power to the motor.

Moreover, any combination of the above components and those obtained by converting the expression of the present invention into methods or systems and so on are also effective as aspects of the present invention.

### Effects of the Invention

According to the present invention, there can be provided an electrically powered tool with which it is possible to suppress the effect of a fluctuation in power supply voltage on load discrimination accuracy.

### BRIEF DESCRIPTION OF THE DRAWINGS

FIG. 1 is a block diagram of an electrically powered tool 1 according to an embodiment of the present invention.
FIG. 2 is a time chart showing an example of an operation of the electrically powered tool 1.
FIG. 3 is a control flowchart of the electrically powered tool 1.
FIG. 4 is a graph showing an example of relationships of practical current (current during operation), current threshold value for load discrimination, and no-load current with respect to battery voltage in the electrically powered tool 1.
FIG. 5 is a graph showing an example of relationships of practical current (current during operation), current threshold value for load discrimination, and no-load current with respect to battery voltage in a modified example.
FIG. 6 is a perspective view of a shear as an example of a conventional electrically powered tool.

### DESCRIPTION OF THE EMBODIMENTS

Hereinafter, preferred embodiments of the present invention are described in detail with reference to the drawings. Moreover, the same or equivalent components, members, processing and so on shown in the drawings are denoted by the same reference numerals, and repeated descriptions are properly omitted. In addition, the embodiments do not limit the invention but are intended to be exemplary, and all of the features and combinations thereof described in the embodiments are not necessarily essential to the invention.

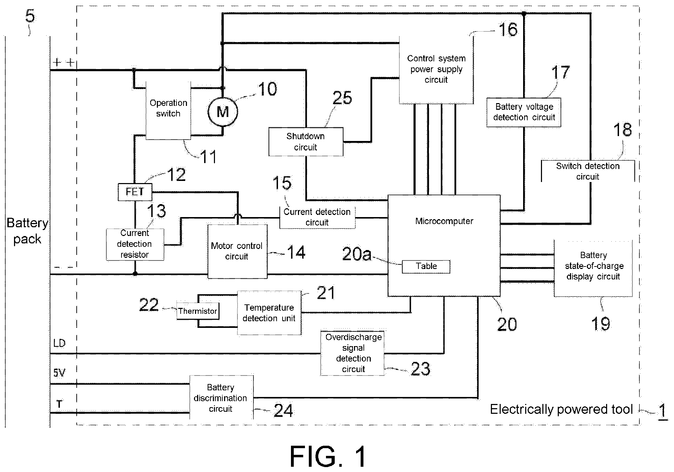

An embodiment of the present invention is explained with reference to FIG. 1 to FIG. 4. FIG. 1 is a block diagram of an electrically powered tool 1 according to an embodiment of the present invention. The electrically powered tool 1 is of a cordless type, in which a battery pack (storage battery) 5 serving as a power supply is detachably installed. Moreover, in the electrically powered tool 1, preferably, two or more kinds of battery packs 5 with different rated voltages from each other can be alternatively installed as the power supply. Here, as an example, two kinds of battery packs 5 with rated voltages of 18 V and 14.4 V respectively can be installed.

A positive electrode terminal and a negative electrode terminal of the battery pack 5 are respectively connected to a positive electrode terminal and a negative electrode terminal of the electrically powered tool 1. A motor 10, an operation switch (trigger switch) 11, a field-effect transistor (FET) 12 as a switching element, and a current detection resistor 13 are connected in series between the positive electrode terminal and the negative electrode terminal of the electrically powered tool 1. The motor 10 is a commutator motor (DC motor with brushes) including a stator and a rotor, in which a commutator is provided on the rotor. On a current path through which current flows from the positive electrode terminal of the battery pack 5 to the negative electrode terminal of the battery pack 5 via the operation switch 11, a control system power supply circuit 16, a battery voltage detection circuit 17 and a switch detection circuit 18 are provided in parallel.

The control system power supply circuit 16 supplies a power supply voltage to a microcomputer 20 as a controller that includes an operation part and a memory part, and to other control system circuits. In a state in which the microcomputer 20 is powered off, when the operation switch 11 is switched on, the microcomputer 20 is started by the power supply from the control system power supply circuit 16. In the case where the operation switch 11 is switched off, the power supply to the microcomputer 20 is cut off and the microcomputer 20 stops.

The battery voltage detection circuit 17 is for detecting an output voltage (hereinafter also written as "battery voltage") of the battery pack 5, and is connected to an A/D converter of the microcomputer 20. An analog value (battery voltage detection signal) corresponding to the battery voltage detected by the battery voltage detection circuit 17 is input to the microcomputer 20. The microcomputer 20 converts the analog value into a digital value by the built-in A/D converter, compares the digital value with a preset predetermined value, and detects the battery voltage.

The switch detection circuit (trigger detection circuit) 18 is for detecting ON/OFF of the operation switch 11, and outputs a switch detection signal to the microcomputer 20. The microcomputer 20 recognizes ON/OFF of the operation switch 11 according to the switch detection signal.

A motor control circuit 14 is a circuit performing switching control of the FET 12 in accordance with an instruction from the microcomputer 20. In a normal state, the microcomputer 20 is supplied with power from the control system power supply circuit 16 and starts, and when the ON state of the operation switch 11 is detected, the microcomputer 20 outputs to the motor control circuit 14 a command to turn on the FET 12.

A battery discrimination circuit 24 is for discriminating the kind (rated voltage) of the battery pack 5, and an output thereof is connected to the terminal of the A/D converter of the microcomputer 20. The A/D converter is an electronic circuit quantizing the input analog signal and converting it into a digital signal. An analog value (battery discrimination signal) corresponding to the kind of the battery pack 5 which is detected by the battery discrimination circuit 24 is input to the microcomputer 20. The microcomputer 20 converts the analog value into a digital value by the built-in A/D converter, compares the digital value with a preset predetermined value, and discriminates the kind of the battery pack 5.

A current detection circuit 15 is a circuit detecting current flowing through the motor 10 or the FET 12 by detecting a terminal voltage of the current detection resistor 13, and is connected to the A/D converter of the microcomputer 20. An analog value (current detection signal) corresponding to the current detected by the current detection circuit 15 is input to the microcomputer 20. The microcomputer 20 converts the analog value into a digital value by the built-in A/D converter, compares the digital value with a preset predetermined value, and determines whether the current flowing through the motor 10 or the FET 12 is an abnormal current (overcurrent). When detecting the overcurrent, the microcomputer 20 outputs a motor stop signal to the motor control circuit 14 to stop the motor 10 and protect the battery pack 5. In addition, as described later, the microcomputer 20 associates a current threshold value for discriminating (detecting) whether an operation is being performed (whether no load is applied or a load is applied) with the battery voltage, stores them in a table 20a being part of the memory part of the microcomputer 20 itself, and determines whether the electrically powered tool 1 is operating or not by comparing a detected current value with the current threshold value. The table 20a is equivalent to a memory element of the present invention.

A battery state-of-charge display circuit 19 is for comparing the battery voltage detected by the battery voltage detection circuit 17 with a preset threshold value to turn on an LED (light emitting diode) in accordance with a battery state-of-charge, and displays the battery state-of-charge only while a tact switch inside the battery state-of-charge display circuit 19 is being pressed.

A temperature detection circuit 21 is a circuit for detecting a temperature of the FET 12, and detects a voltage between terminals of a thermistor 22 as a temperature detection element disposed in the vicinity of the FET 12. An output of the temperature detection circuit 21 is connected to the terminal of the A/D converter of the microcomputer 20. An analog value (temperature detection signal) corresponding to the temperature (the voltage between terminals of the thermistor 22) detected by the temperature detection circuit 21 is input to the microcomputer 20. The microcomputer 20 converts the analog value into a digital value by the built-in A/D converter, compares the digital value with a preset predetermined value, and determines whether the temperature of the FET 12 is an abnormally high temperature. When detecting the abnormally high temperature of the FET 12, the microcomputer 20 outputs the motor stop signal to the motor control circuit 14 to stop the motor 10 and protect the FET 12.

An overdischarge signal detection circuit 23 is connected to an LD terminal of the battery pack 5 and detects an overdischarge signal sent out from the battery pack 5. When receiving the overdischarge signal from the battery pack 5, the overdischarge signal detection circuit 23 outputs an overdischarge detection signal to the microcomputer 20. When receiving the overdischarge detection signal, the microcomputer 20 outputs the motor stop signal to the motor control circuit 14 to stop the motor 10 and protect the battery pack 5.

A shutdown circuit 25 is a circuit for stopping the control system power supply circuit 16 according to a shutdown instruction signal from the microcomputer 20 after a predetermined period of time has elapsed since the motor 10 is stopped by various protective functions. When the control system power supply circuit 16 stops, the power supply to the microcomputer 20 is gone, and the microcomputer 20 shuts down. That is, even in a state in which power is being supplied to the microcomputer 20 while the operation switch 11 is ON, when the motor 10 stops due to a protective function, the microcomputer 20 spontaneously stops the power supply. Accordingly, electric power consumption of the microcomputer 20 can be suppressed. A shorter time until the stop occurs can more suppress the electric power consumption. However, the time can be properly changed.

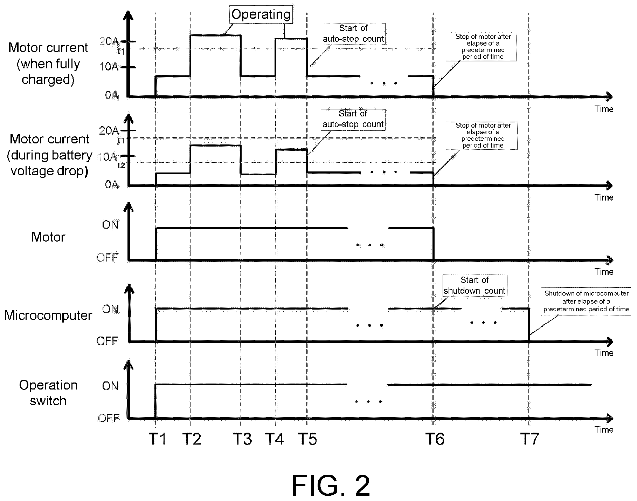

FIG. 2 is a time chart showing an example of an operation of the electrically powered tool 1. The electrically powered tool 1 has an auto-stop function of, when the no-load state has continued for a predetermined period of time, stopping the motor 10 and the microcomputer 20 even when the operation switch 11 is ON. FIG. 2 shows a time chart from when the operation switch 11 is switched on until when the auto-stop function is activated to shut down the microcomputer 20.

The time chart in FIG. 2 shows, from top to bottom, current flowing through the motor 10 in the case where the battery pack 5 is fully charged, current flowing through the motor 10 in the case where a remaining capacity of the battery pack 5 is reduced, ON/OFF of the motor 10, ON/OFF of the microcomputer 20, and ON/OFF of the operation switch 11. Moreover, in FIG. 2, II on the vertical axis of the current chart of the motor 10 indicates a current threshold value for load discrimination (current threshold value for discriminating whether no load is applied or a load is applied) in the case where the battery pack 5 is fully charged, and I2 indicates a current threshold value for load discrimination in the case where the remaining capacity of the battery pack 5 is reduced (I1>I2).

The battery pack 5 is installed in the electrically powered tool 1, and when the operation switch 11 is switched on at time T1, as the power is supplied from the control system power supply circuit 16 to the microcomputer 20 and the microcomputer 20 starts, the motor control circuit 14 turns on the FET 12 under the control of the microcomputer 20, the series circuit including the battery pack 5, the operation switch 11, the motor 10 and the FET 12 is energized, and the motor 10 starts. After that, when an operation is started at time T2, a load is applied to the motor 10, and the current (hereinafter also written as "motor current") flowing through the motor 10 rises. Here, in the case where the remaining capacity of the battery pack 5 is reducing, although the motor current during operation does not reach the threshold value I1 of the fully charged state, it exceeds the threshold value I2 corresponding to the state in which the remaining capacity is reduced. That is, in the case where only the threshold value I1 is present, when the remaining capacity of the battery pack 5 is reduced, the operating state may also be misidentified as the no-load state by the microcomputer 20; however, in the present embodiment, since the microcomputer 20 changes the threshold value in response to the remaining capacity (output voltage) of the battery pack 5, even if the remaining capacity of the battery pack 5 is reduced (even if the output voltage of the battery pack 5 is reduced), whether no load is applied or a load is applied can be properly specified (discriminated).

At time T3, the operation is stopped temporarily, the current flowing through the motor 10 is reduced to be equal to or lower than the threshold value, and an auto-stop count by the microcomputer 20 is started. At time T4 before a predetermined period of time has elapsed since time T3, since the operation is resumed, no auto-stop control is performed and the count by the microcomputer 20 is reset. After that, when the operation is suspended at time T5, the current flowing through the motor 10 is reduced to be equal to or lower than the threshold value, and the microcomputer 20 starts the auto-stop count. At time T6 when a predetermined period of time has elapsed since the start of the count, the microcomputer 20 controls the motor control circuit 14 to turn off the FET 12, and the rotation of the motor 10 is stopped even if the operation switch 11 is ON.

After the motor 10 stops, the microcomputer 20 starts a shutdown count, and outputs a shutdown signal to the shutdown circuit 25 at time T7 when a predetermined period of time has elapsed since time T6. The shutdown circuit 25 that has received the shutdown signal turns off the control system power supply circuit 16, performs a shutdown processing that cuts off the power supply to the microcomputer 20, and the microcomputer 20 stops.

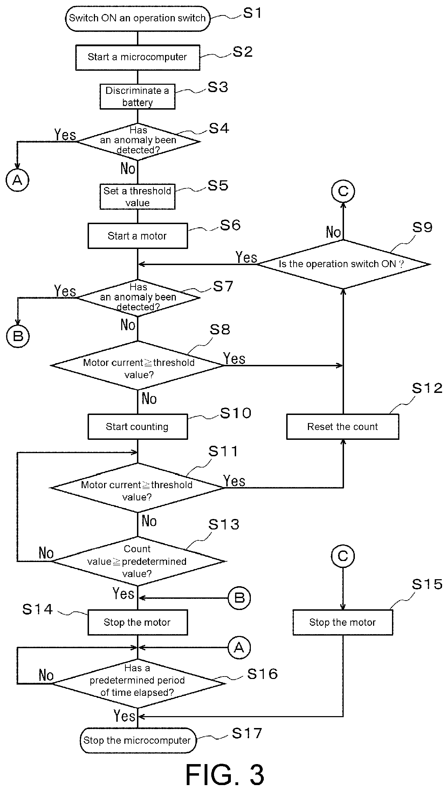

FIG. 3 is a control flowchart of the electrically powered tool 1. The flowchart is started by the operator switching on the operation switch 11 in the state in which the battery pack 5 is installed in the electrically powered tool 1. When the operation switch 11 is switched on (S1), power is supplied from the control system power supply circuit 16 to the microcomputer 20, and the microcomputer 20 starts (S2). The steps from here onward are processed by executing programs by the microcomputer 20. The microcomputer 20 performs discrimination of the battery pack 5 (S3). Specifically, the microcomputer 20 specifies the rated voltage of the battery pack 5 according to the battery discrimination signal from the battery discrimination circuit 24.

The microcomputer 20 confirms presence or absence of various anomalies (S4). Specifically, the microcomputer 20 confirms whether or not the battery pack 5 is overdischarged, whether or not a voltage required for the operation is secured, and whether or not the FET 12 has an abnormally high temperature (for example, 100°C or higher). If no anomaly is detected (S4, No), the microcomputer 2 sets a threshold value (current threshold value for discriminating whether no load is applied or a load is applied) corresponding to the output voltage of the battery pack 5 (S5). Specifically, the microcomputer 20 reads the threshold value corresponding to the battery voltage from the table 20a of the microcomputer 20 itself. After setting the threshold value, the microcomputer 20 controls the motor control circuit 14 to turn on the FET 12, to start the motor 10 (S6). Here, in order that the same operation output is obtained no matter whether the rated voltage of the battery pack 5 installed in the electrically powered tool 1 is 18 V or 14.4 V, in the case where the battery pack 5 with a rated voltage of 18 V is installed in the electrically powered tool 1, the microcomputer 20 performs a pulse width modulation (PWM) control on the FET 12, so that an effective value of a voltage applied to the motor 10 is controlled to be the same as that in the case where the battery pack 5 with a rated voltage of 14.4 V and being fully charged is installed.

The microcomputer 20 confirms the presence or absence of various anomalies during driving of the motor 10 (S7). The confirmation of anomalies here includes, in addition to the confirmation of anomalies in step S4, confirmation of whether an overcurrent is present or not. If no anomaly is detected (S7, No), the microcomputer 20 confirms whether or not the motor current is equal to or greater than the threshold value (S8). If the motor current is equal to or greater than the threshold value (S8, Yes), as long as the operation switch 11 is switched on (S9, Yes), the microcomputer 20 continues the driving of the motor 10 while confirming the presence or absence of various anomalies (S7). In the case where the motor current is neither equal to nor greater than the threshold value (S8, No), the microcomputer 20 starts an auto-stop count (S10). When the motor current becomes equal to or greater than the threshold value (S11, Yes) before a count value reaches a predetermined value (S13, No), the microcomputer 20 resets the auto-stop count (S12) to return to step S9.

When the count value of the auto-stop count reaches the predetermined value (S13, Yes), which is, when the motor current remains below the threshold value for a predetermined period of time, the microcomputer 20 controls the motor control circuit 14 to turn off the FET 12, stops the supply of electric power to the motor 10, and stops the motor 10 (S14). When a predetermined period of time has elapsed since the stop of the motor 10 (S16, Yes), the microcomputer 20 outputs the shutdown signal to the shutdown circuit 25 to stop the control system power supply circuit 16, cuts off the power supply to the microcomputer 20 itself, and stops (S17). Moreover, in the case where an anomaly is detected in step S4 (S4, Yes), the microcomputer 20 moves to step S16, and stops after a predetermined period of time has elapsed since the detection of the anomaly (S16, Yes, S17). In addition, in the case where an anomaly is detected in step S7 (S7, Yes), the microcomputer 20 controls the motor control circuit 14 to turn off the FET 12, stops the supply of electric power to the motor 10 and then stops the motor 10 (S14), and stops after a predetermined period of time has elapsed since the stop of the motor (S16, Yes, S17). In addition, in the case where the operation switch 11 is OFF in step S9 (S9, No), the supply of electric power to the motor 10 is gone and the motor 10 stops (S15). At the same time, the supply of electric power to the microcomputer 20 is gone and the microcomputer 20 stops (S17).

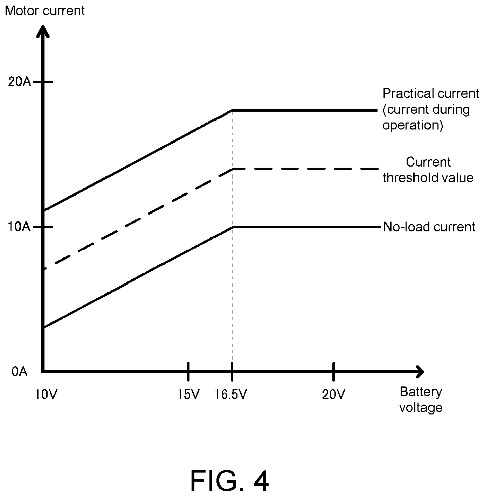

FIG. 4 is a graph showing an example of relationships of practical current (current during operation), current threshold value for load discrimination, and no-load current with respect to battery voltage in the electrically powered tool 1. The microcomputer 20 has the table 20a in which the battery voltage and the current threshold value are associated with each other and stored. The current threshold value for load discrimination shown in FIG. 4 is a graph showing the relationship between the battery voltage and the current threshold value stored in the table 20a. In FIG. 4, the battery voltage of 16.5 V corresponds to the output voltage of the battery pack 5 with a rated voltage of 14.4 V when the battery pack 5 is fully charged. The current threshold value is set to be between the practical current and the no-load current in all voltage ranges. That is, the microcomputer 20 constantly monitors the battery voltage, and changes the current threshold value according to the voltage value thereof.

In the region where the battery voltage is 16.5 V or less, the practical current and the no-load current are both proportional to the battery voltage, and the current threshold value for load discrimination is also proportional to the battery voltage in accordance with the slope of the practical current and the no-load current. The slopes of the practical current, the current threshold value for load discrimination and the no-load current become zero in the region where the battery voltage is 16.5 V or higher. This is because that in the case where the battery pack 5 with a rated voltage of 18 V is installed in the electrically powered tool 1, the current at the battery voltage of 16.5 V or higher is controlled to be the same as that at the battery voltage of 16.5 V by the PWM control of the FET 12.

According to the present embodiment, the following effects can be achieved.
(1) Since the microcomputer 20 changes the current threshold value for discriminating (detecting) whether or not a load is applied to the motor 10 in accordance with the output voltage of the battery pack 5, even if the remaining capacity of the battery pack 5 is reduced, whether or not a load is being applied to the motor 10 can be properly discriminated. That is, the effect of a fluctuation in the power supply voltage on load discrimination accuracy can be suppressed. Accordingly, the microcomputer 20 is capable of properly executing a control corresponding to whether or not a load is being applied to the motor 10, such as capable of properly executing the auto-stop function, or the like.
(2) Since the auto-stop function can be realized by discriminating the load state without performing detection of a rotational speed of the motor 10, a smaller number of components are required and the cost is low.
(3) Since the microcomputer 20 performs control so that the microcomputer 20 itself stops after a predetermined period of time has elapsed since the stop of the motor 10, electric power consumed by the microcomputer 20 can be suppressed.
(4) Since the control of changing the current flowing through the motor according to the voltage of the power supply (battery), the stop control at the time of detection of an anomaly, and the auto-stop function control are to be performed by a common element (FET 12), the number of components is suppressed.

Although the present invention has been heretofore described referring to the embodiments as examples, it is to be understood by those skilled in the art that various modifications of the components and processing processes of the embodiments can be made within the scope described in the claims. Hereinafter, modified examples are mentioned.

In the previous embodiments, the current threshold value is set to change linearly with respect to the detected battery voltage. However, the threshold value may change in stages if it is positively correlated with the detected battery voltage. Specifically, FIG. 5 is a graph showing the relationships of practical current (current during operation), current threshold value for load discrimination, and no-load current with respect to battery voltage in a modified example, in which the current threshold value is controlled to be lowered to 10 A when the battery voltage descends to 15 V. In addition, the current threshold value is controlled to be set to the same as the lowest current threshold value of the previous embodiments when the battery voltage further drops to around 12 V. The current threshold value may be set in this way to be between the practical current and the no-load current. In addition, there are two stages of change in the modified example. However, the number of stages may be increased.

The rated voltage of the battery packs 5 that can be installed in the electrically powered tool 1 may be of only one kind. The power supply of the electrically powered tool 1 may be a primary cell or an AC power supply. In the case of an AC power supply such as a commercial power supply, by setting the current threshold value for load discrimination in accordance with a difference in voltage drop based on the length of a power cable, the microcomputer 20 is capable of suppressing the effect of a fluctuation in the power supply voltage on load discrimination accuracy, and of properly executing a control corresponding to whether or not a load is being applied to the motor 10.

The operation switch 11 is not limited to a switch of the type which can be maintained in the ON state (which can be locked in the ON state). In the case where the operation switch 11 cannot be maintained in the ON state, the chance that the auto-stop function operates is reduced. However, there are also cases where the ON state of the operation switch 11 continues in the no-load state in places unintended by the operator for some reason, and in such cases, suppression of electric power consumption and stopping of an unintended operation are properly performed.

The motor 10 is not limited to a motor with brushes, but may be a brushless motor. In the case of a brushless motor, the circuit configuration becomes more complex and the cost is increased for an inverter circuit or rotation detection. However, in the case where the load state is discriminated according to the motor current, adverse effects of the power supply voltage on the load discrimination accuracy can be suppressed.

By setting a temperature threshold value of the FET 12 to a low value and forcibly reducing the rotational speed of the motor 10 by the PWM control of the FET 12 in the case where the temperature of the FET exceeds the threshold value, the microcomputer 20 may render the electrically powered tool 1 usable while informing the operator that the electrically powered tool 1 is in a severe state.

### Reference Signs List

1: Electrically powered tool; 3: housing; 4: tail cover; 5: battery pack (storage battery); 6: gear case; 7: movable cutter; 8: fixed cutter; 9: blade holder; 10: motor (electric motor); 11: operation switch (trigger switch); 12: FET; 13: current detection resistor; 14: motor control circuit; 16: control system power supply circuit; 17: battery voltage detection circuit; 18: switch detection circuit (trigger detection circuit); 19: battery state-of-charge display circuit; 20: microcomputer; 21: temperature detection circuit; 22: thermistor; 23: overdischarge signal detection circuit; 24: battery discrimination circuit; 25: shutdown circuit; 30: hand guard; 31: power cable; 32: brush holder.

## Claims

1. An electrically powered tool comprising:
a motor;
a power supply voltage detection circuit, detecting a voltage of a power supply for driving the motor;
a current detection circuit, detecting a current flowing through the motor; and
a controller, controlling a driving of the motor,
wherein the controller has a memory element in which a threshold value for a no-load state detection is stored,
the controller discriminates a load state of the motor according to whether or not the current flowing through the motor is equal to or greater than the threshold value, and the controller is capable of changing the threshold value in accordance with the voltage of the power supply.

2. The electrically powered tool according to claim 1, wherein when the current flowing through the motor remains below the threshold value for a predetermined period of time, the controller stops a supply of electric power to the motor.

3. An electrically powered tool comprising: a motor;
a power supply voltage detection circuit, detecting a voltage of a power supply for driving the motor;
a current detection circuit, detecting a current flowing through the motor; and
a controller, controlling a driving of the motor,
wherein when the current flowing through the motor remains below a threshold value for a no-load state detection for a predetermined period of time, the controller stops a supply of electric power to the motor, and the controller is capable of changing the threshold value in accordance with the voltage of the power supply.

4. The electrically powered tool according to any one of claims 1 to 3, wherein the controller has a table in which the voltage of the power supply and the threshold value are associated with each other and stored.

5. The electrically powered tool according to any one of claims 1 to 4, wherein the controller changes the threshold value in accordance with the voltage in at least one portion of a voltage range so that the voltage of the power supply is positively correlated with the threshold value.

6. The electrically powered tool according to any one of claims 1 to 5, comprising an operation switch which is adapted to be operated by an operator and which switches the driving and stopping of the motor, wherein the operation switch is adapted to be maintained in an ON state.

7. The electrically powered tool according to any one of claims 1 to 6, wherein the power supply is a battery.

8. The electrically powered tool according to claim 7, wherein two or more kinds of batteries with different rated voltages from each other are adapted to be alternatively installed as the power supply.

9. The electrically powered tool according to any one of claims 1 to 6, wherein the power supply is an AC power supply.

10. The electrically powered tool according to any one of claims 1 to 9, wherein the motor is a commutator motor comprising a stator and a rotor, in which a commutator is provided on the rotor.

11. The electrically powered tool according to any one of claims 2 to 10, further comprising a switching element controlling the current flowing through the motor, wherein the controller stops the supply of electric power to the motor by switching off the switching element.

12. The electrically powered tool according to claim 11, comprising an anomaly detection component detecting an anomalous state of at least one of the motor or the switching element, wherein when the anomaly detection component detects an anomaly, the controller switches off the switching element to stop the supply of electric power to the motor.
